# EUROPEAN PATENT APPLICATION

(11) **EP 4 350 902 A1**
(43) Date of publication of application: **10.04.2024**
(21) Application number: 22306509.5
(22) Date of filing: 07.10.2022
(51) Int. Cl.: H01R 43/055, H01R 43/28, H01R 4/20

(54) **WIRE INSERTION TOOL**

(71) Applicant: Goodrich Actuation Systems SAS, 95310 Saint Ouen l'Aumône (FR)
(72) Inventor: HUBAULT, Christophe, 95150 Taverny (FR); BOUDARD, Matthieu, 95610 Eragny sur Oise (FR)
(74) Representative: Dehns

(57) **Abstract**

A handheld wire insertion tool for inserting conductive wires of a cable into an electrical contact, the tool comprising: a receiving portion configured to receive an electrical contact; a funnel portion configured to guide free ends of conductive wires of a cable into the electrical contact when the contact is located in the receiving portion; and a securing member configured to secure the funnel portion relative to the electrical contact located in the receiving portion.

## Description

### TECHNICAL FIELD

The present disclosure relates generally to a tool and method for inserting conductive wires into an electrical contact. In particular, embodiments of the present disclosure relates to a tool and method of use thereof for inserting conductive wires from a stripped electrical cable into an electrical contact, e.g. for use in avionic electrical connectors.

### BACKGROUND

Difficulties can arise when inserting the conductive wires of an electrical cable into the barrel of an electrical contact. For instance, it can be difficult to keep the wires aligned with each other during insertion, such that some of the wires splay out from the electrical contact. At worst, this can irreparably damage the conductive wires. At best, even if the conductive wires can be extracted from the barrel of the electrical contact and re-inserted, this increases the time required to complete the operation. This is especially the case in situations requiring that the insertion is performed by hand, such as when replacing electrical contacts at the ends of a vehicle or airplane engine power connector.

### SUMMARY

According to a first aspect, the present disclosure provides a handheld wire insertion tool for inserting conductive wires of a cable into an electrical contact, the tool comprising: a receiving portion configured to receive an electrical contact; a funnel portion configured to guide free ends of conductive wires of a cable into the electrical contact when the contact is located in the receiving portion; and a securing member configured to secure the funnel portion relative to the electrical contact when located in the receiving portion.

In use, a user may hold the handheld wire insertion tool and place an electrical contact having a cavity into the receiving portion. The cavity of the electrical contact may be provided by a barrel of the electrical contact, and may be received by the receiving portion such that the opening to the barrel faces towards the funnel portion. The securing member of the tool may secure the funnel portion relative to the electrical contact, and the user may the insert conductive wires through the funnel portion into the cavity of the electrical portion.

The receiving portion and the securing member may be configured to inter-engage so as to form a cavity therebetween for receiving the contact.

The securing member may comprise a tubular member defining an inner volume, wherein the tubular member comprises a first open end for inserting an electrical contact and/or the receiving portion.

When the receiving portion and the securing member are inter-engaged, the funnel portion may be configured to be at a first end of cavity.

The securing member may comprise a first opening and a second opening smaller than the first opening, and wherein, when the receiving portion and the securing member are inter-engaged, the second opening may be at a second end of the cavity opposite to the first end of cavity.

The securing member may comprise a radially inwardly projecting portion. The radially inwardly projecting portion may provide the second opening of the securing member. This may be configured to engage with a shoulder on the electrical contact, when the electrical contact is in the cavity.

The receiving portion may be configured to be inserted inside the securing member.

The receiving portion may be configured to have a radial interference fit with the securing member when inserted inside the securing member.

In other words, the outer diameter of the receiving portion and in the inner diameter of the part of the securing member that receives the receiving portion may be configured such that there is an interference fit between these two components.

The receiving portion and securing member may be configured to fit together with a radial interference fit having a tolerance of less than 0.1 mm.

The funnel portion may be located within a flange that extends radially outward from the receiving portion.

The funnel portion may comprise an inner surface which tapers from a first aperture to a second aperture that is smaller than the first aperture, as a function of direction towards the receiving portion.

The inner surface may linearly taper from the first aperture to the second aperture.

The receiving portion may comprise a through-hole for receiving an electrical contact therein, wherein the diameter of the second aperture of the funnel portion may be smaller than the diameter of the through-hole of the receiving member, for providing a shoulder to abut the electrical contact when received in the through-hole.

The tool may be elongated and has a longitudinal axis, wherein the tool may have a length of less than 10 cm along the longitudinal axis, and may have a radius of less than 10cm in a direction perpendicular to the longitudinal axis.

The dimensions of the tool are in the condition when the receiving portion is fully inserted into the securing member.

The tool may have a length of less than 8cm, less than 6 cm or less than 4cm.

The tool may have a radius of less than 5cm, less than 4cm or less than 3cm.

The funnel portion and the receiving portion may be integrally connected.

The funnel portion and the receiving portion may be formed from annular segments that are separable from each other so that the annular segments may be removed from surrounding a cable.

The tool may comprise: (i) a first piece providing a first part of the receiving portion and a first part of the funnel portion, wherein the first parts of the receiving and funnel portions are integral; and (ii) a second piece providing a second part of the receiving portion and a second part of the funnel portion, wherein the second parts of the receiving and funnel portions are integral. In use, the first and second pieces may be held together by the securing member so as to provide the receiving portion and the funnel portion.

According to a second aspect, the present disclosure provides a kit comprising: the tool having any of the embodiments of the first aspect; and said electrical contact.

The receiving portion may be configured to contact an outer surface of the electrical contact when the electrical contact is received by the receiving portion; wherein, when the receiving portion contacts the outer surface of the electrical contact, the smaller aperture of the funnel portion is configured to have a diameter which is the same size or smaller than a diameter of an opening into the cavity of the electrical contact.

According to a third aspect, the present disclosure provides a method of inserting conductive wires of a cable into an electrical contact, the method comprising: providing the handheld wire insertion tool having any of the embodiments of the first aspect; receiving an electrical contact within the receiving portion; securing the funnel portion relative to the electrical contact by engaging the securing member with the receiving portion; and inserting the free ends of conductive wires of a cable through the funnel portion and into the electrical contact.

The step of inserting the free ends of the wires into the electrical contact may comprise inserting the wires into a barrel portion of the contact.

The method may then further comprise removing the tool from the cable and securing the wires to the contact, such as by crimping the barrel portion of the contact or soldering the wires to the contact.

### BRIEF DECRIPTION OF THE DRAWINGS

Figure 1A shows a schematic of an airplane engine component for generating and/or transferring electrical power from an airplane engine through a flexible electrical cable assembly, Figure 1B shows an image of an electrical contact crimped to a plurality of conductive wires which form a core of a cable, and Figure 1C shows an image of an un-crimped electrical contact in isolation;
Figure 2A-2C shows images of the stages of a conventional method of removing and replacing an electrical contact on a cable, and Figure 2D shows an image of the damaged wires that may result from the conventional method;
Figure 3 shows a schematic cross-sectional view of a wire insertion tool for inserting conductive wires of a cable into an electrical contact, according to an embodiment of the present disclosure;
Figure 4A shows a schematic cross-sectional view of the wire insertion tool of Figure 3 with an electrical contact received therein, and Figure 4B shows a schematic cross-sectional view of the wire insertion tool and electrical contact of Figure 4A with the free ends of conductive wires of a cable inserted into the electrical contact;
Figure 5A-5F shows images of the stages of a method of inserting conductive wires of a cable into an electrical contact using a wire insertion tool according to an embodiment of the present disclosure; and
Figure 6A shows a perspective image of the different portions of the wire insertion tool shown in Figures 3-5, and Figure 6B shows the wire insertion tool of Figure 6A from a different perspective.

### DESCRIPTION

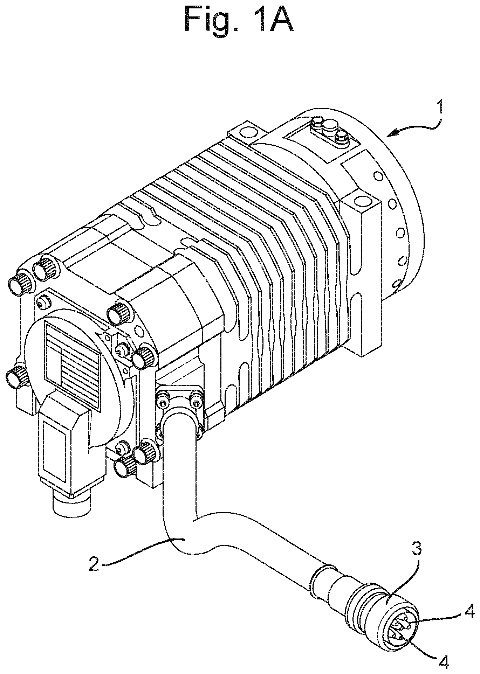

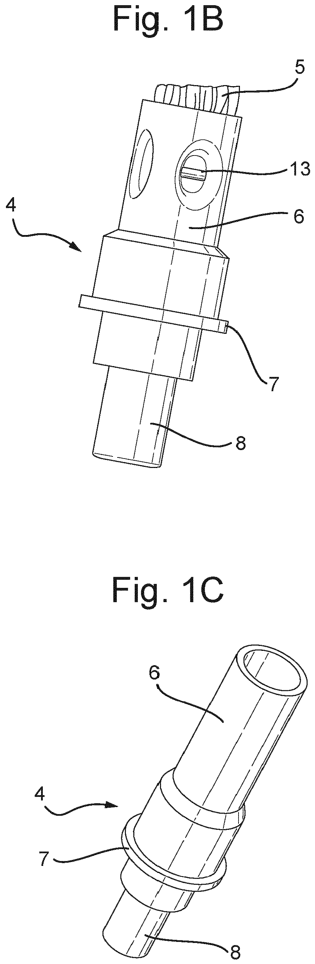

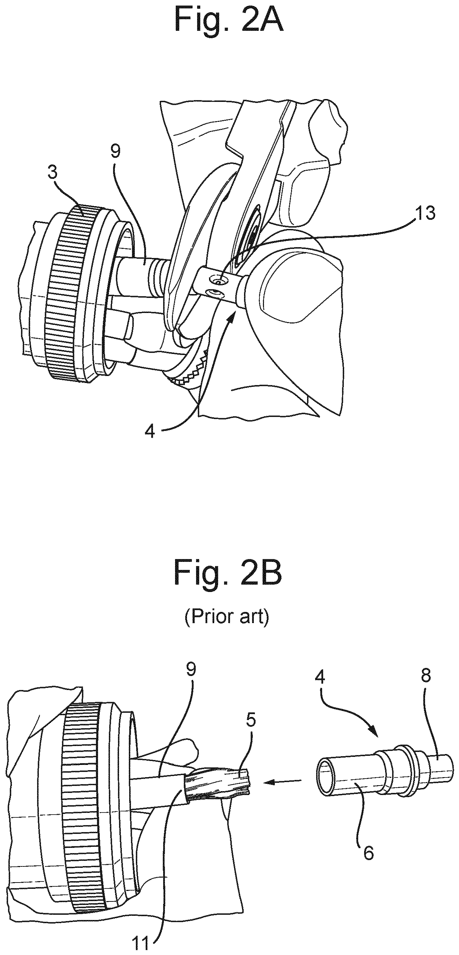

Figure 1A shows an engine component 1 (e.g. for an airplane) for generating and/or transferring electrical power from an engine (not shown). The engine component 1 includes a plurality of flexible electrical cables connected thereto shown grouped together as a single line 2 in Figure 1A, each cable 9 being formed from a plurality of conducting wires 5 (e.g., as shown in Figs. 1B and 2B-2D) which are stranded or wound together to constitute an electrical conduction path. The free end of the line 2 is provided with an electrical connector assembly 3 for connecting to one or more electrical component (not shown). The electrical connector assembly 3 may include a plurality of electrical contacts 4, each of which may be connected at an end of a respective cable 9. The electrical contacts 4 may be male (e.g. pin) connectors for connecting with a complementary female electrical contacts of the downstream electrical component (not shown). However, it is contemplated that the electrical contacts 4 could be female contacts for connecting to male contacts.

Figure 1B shows an image of an electrical contact 4 connected to the plurality of conducting wires 5 which form the core of a cable 9. The electrical contact 4 is connected to the wires 5 by locating the ends of the wires 5 within a barrel 6 of the electrical contact 4 and then crimping the barrel 6 onto the wires. Figure 1B shows the crimped connection 13, whereas Figure 1C shows an image of an un-crimped electrical contact 4 prior to connection to the wires 5. In addition to the barrel 6, the electrical contact 4 may include one or more shoulders 7 as well as a male conducting pin portion 8.

As will be understood, the lifetime of electrical contacts 4 may be considerably shorter than the lifetimes of the electrical connector assembly 3, the cables 9, the cable assembly 2 or component 1. For instance, especially in the context of extreme environments such as when used for transferring electrical power from an airplane engine, the electrical contact 4 may be more susceptible to damage by corrosion, shock or ingestion of hydraulic fluid. Due to these reasons, or other reasons, maintenance of the engine component 1 and related flexible electrical cable assembly 2 may require removal of an old electrical contact 4 from the end of a cable 9.

Figures 2A-2D illustrate a conventional technique for replacing an electrical contact 4. As shown in Figure 2A, in order to remove the electrical contact 4 from the cable 9, the cable 9 will be cut at a location adjacent to the electrical contact 4. The electrically insulating sleeve 11 of the cable 9 (and any other external sleeves) is then removed so as to reveal the plurality of conducting wires 5 in the core of the cable 4. As shown in Figure 2B, the wires are then inserted into the barrel 6 of a replacement electrical contact 4. Subsequent crimping of the barrel 6 of the electrical contact 4 onto the conducting wires 5 completes the process.

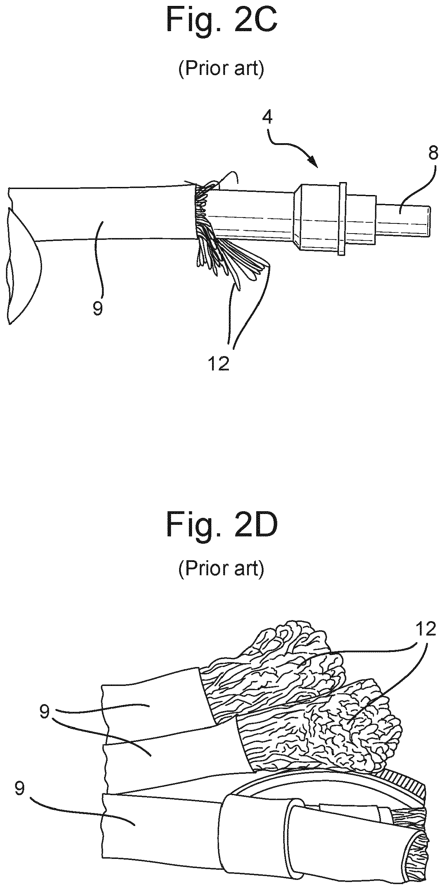

Conventionally, a technician inserts the stranded conducting wires 5 into the barrel 6 by hand. However, this may lead to some wires 5 bending or splaying out from the barrel 6, resulting in bent or damaged wires 12, as shown in Figures 2C and 2D. In this case, the replacement process has not been a success, and the technician is required to recommence the process. This may require cutting off the end of the cable 9, so as to remove the bent or damaged wires 12, and then repeating the steps described above. Not only is this time consuming, but it may result in the cable 9 becoming shorter than the other cables 9, which may then result in the need to cut all of the other cables to the same length and reinsert them into their electrical contacts 4. If the problem is re-encountered then this may lead to the cables becoming too short, therefore requiring them to be replaced rather than maintained.

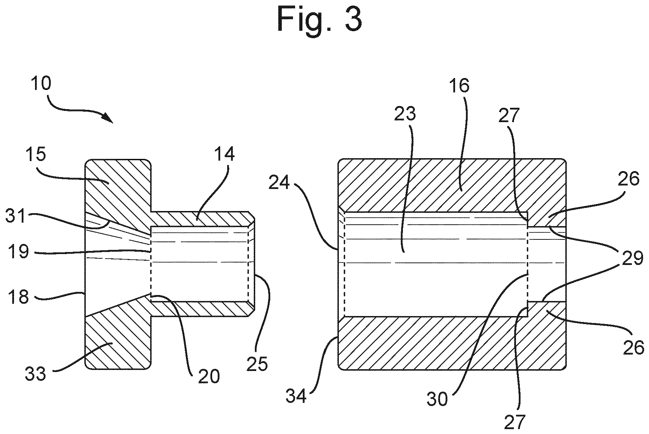

Figure 3 shows a schematic cross-sectional view of a wire insertion tool 10 for inserting conductive wires 5 (not shown) of a cable 9 (not shown) into an electrical contact 4 (not shown), according to an embodiment of the present disclosure. Wire insertion tool 10 includes a an electrical contact receiving portion 14, a funnel portion 15 and a securing member 16. The receiving portion 14 and the funnel portion 15 are integral, whereas the securing member 16 is a separate piece.

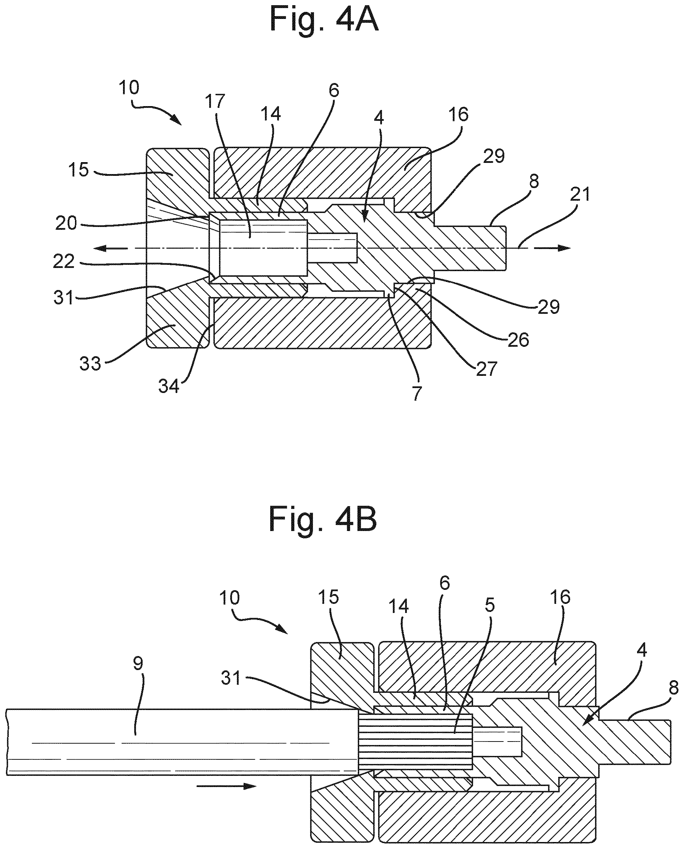

Figure 4A shows a schematic cross-sectional view of the wire insertion tool 10 of Figure 3 with an electrical contact 4 (e.g. an electrical pin contact) received therein, prior to insertion of the wires. Figure 4B shows a schematic cross-sectional view of the wire insertion tool 10 and electrical contact 4 of Figure 4A with the free ends of conductive wires 5 of a cable 9 inserted into the electrical contact 4. As shown, receiving portion 14 receives a barrel end of electrical contact 4, such that the opening to the interior volume 17 of the barrel 6 is directed towards the funnel portion 15. The securing member 16 is then secured over the other end of the electrical contact 4 so as to secure the electrical contact in a fixed position between the receiving portion 14 and the securing member 16 (and relative to the funnel portion 15). The securing member 16, receiving portion 14 and funnel portion 15 may all cooperate to secure the electrical contact 4 from moving relative to the wire insertion tool 10 (e.g. by restricting relative movement of the electrical contact 4 in either direction along the longitudinal axis 21 of the tool 10, i.e. axial movement, and/or restricting movement of the electrical contact 4 in the radial direction perpendicular to the longitudinal axis 21, i.e. radial movement), as discussed below.

The receiving portion 14 may have a substantially annular shape defining a through-hole from a first open end 25 (Fig. 3) to the funnel portion 15. In use, at least a portion of the barrel 6 of electrical contact 4 is inserted through the open end 25 of the receiving portion 14. The inner facing surface of the receiving portion 14 contacts the outside of barrel 6 when at least a portion of the barrel 6 of the electrical contact 4 is inserted through the through-hole. Accordingly, this prevents radial movement of the electrical contact 4 relative to the receiving portion 14, as shown in Figures 4A-4B. The funnel portion 15 has an inner surface 31 which tapers, or otherwise extends, from a first aperture 18 to a second aperture 19 which is smaller than the first aperture 18. The inner surface 31 of the funnel portion in Figures 3 and 4A-4B has a truncated conical shape, although other shapes may alternatively be used. The funnel portion 15 may have a shoulder 20 which contacts a rim 22 which defines the opening to the interior volume 17 of barrel 6. As can be see in Figures 4A-4B, contact between the rim 22 of the electrical contact 4 and the shoulder 20 prevents relative axial movement of the electrical contact 4 in a direction towards the funnel portion 15. The inner radius of the shoulder 20 may be the same or smaller than the inner radius of the rim 22, for ensuring the wires 5 are guided into the barrel 6, as will be described in more detail below.

The funnel portion 15 may have an outer flange 33. When the electrical contact 4 is contacted at both ends by the securing member 16 and the receiving 14 and funnel portions 16, the outer flange 33 of the funnel portion 15 and the distal end surface 34 of the securing member 16 may be separated by a small gap so as to not be contacting (e.g. as shown in Figure 4A). Accordingly, further axial pressure applied by a user between the funnel portion 15 and the securing member 16 may impart a clamping force on the electrical contact 4. As will be appreciated, the flange 33 around the larger first aperture 18 of the funnel portion 15 helps a user to grip and manipulate the funnel portion 15, i.e. the flange 33 helps the user to exert an axial force.

The securing member 16 may be a substantially tubular member defining an inner volume 23 in which to hold the electrical contact 4 as well as the receiving portion 14, and having a first open end 24 for inserting both the electrical contact 4 and the receiving portion 14. The electrical contact 4 can either be inserted first through the first open end 24, prior to insertion of the receiving portion 14 such that the receiving portion 14 is positioned between the barrel 6 and the securing member 16, or the electrical contact 4 already received within the receiving portion 14 can be inserted together through the first open end 24.The securing member 16 may contact the outer surface of the receiving portion 14via a tolerance fit as shown in Figures 4A-4B. That is, the receiving portion 14 may be configured to have a radial interference fit when inserted into the securing member 16.

Moreover, the securing member 16 has a radially inwardly projecting portion 26, which is positioned in Figures 4A-4B at the opposing end of the securing member 16 than the first open end 24. The radially projecting portion 26 provides a shoulder 27. As can be seen in Figure 4A, when the securing member 16 secures the electrical contact 4 in a fixed position relative to the funnel portion 15, the shoulder 27 contacts a portion of the electrical contact 4 such as a shoulder 7, thereby preventing relative axial movement of the electrical contact 4 in a direction away from the funnel portion 15. As will be appreciated, shoulder or collar 7 may typically be present on an electrical contact 4, such as a pin contact, to provide a stop for when the electrical contact 4 mates with a corresponding female electrical connector. The radially projecting portion 26 also provides a radially engaging surface 29 wherein similarly, when the securing member 16 secures the electrical contact 4 in a fixed position relative to the funnel portion 15, the radially engaging surface 29 contacts a radially outer facing surface of the electrical contact 4 so as to prevent relative radial movement of the electrical contact 4. The open ends 25,24 of the receiving portion 14 and securing member 16 may have tapered or rounded edges to help facilitate insertion of the electrical contact 4 through each respective end 25,24 and which may help to prevent damage to the electrical contact 4 when being inserted.

The securing member 16 may have a second open end 30 which is smaller than the first open end 24. As shown in Figures 4A-4B, when the electrical contact 4 is inserted into the securing member 16, a portion of the electrical contact 4, such its pin 8, is able to project through the second open end 30. The second open end 30 may define a circular aperture centred on the longitudinal axis 21. As will be appreciated, the centred second open end 30 may help align the electrical contact along the longitudinal axis 21 of the tool, and may also facilitate a user's visual management (i.e., a user can see through the second open end 30 to help correctly aim the electrical contact 4 when inserting it into the securing member 16). Moreover, enabling the pin 8 of the electrical contact 4 to project through the second open end 30 may help avoid degradation or damage to the pin 4.

As such, a user can apply a compressive force between the securing member 16 and the integral receiving 14 and funnel 16 portions such that the electrical contact 4 is secured therebetween. Thus, a user can secure the electrical contact 4 and subsequently manipulate the electrical contact 4 (i.e. move and orientate the opening to the interior volume 17 of barrel 6) by maintaining a compressive force between the cooperating securing member 16 and the integral receiving 14 and funnel 16 portions and simultaneously moving and orientating the cooperating securing member 16 and the integral receiving 14 and funnel 16 portions. As will be appreciated, the tool 10 may improve ergonomic manipulation of the electrical contact 4 by reducing the level of dexterity otherwise required for holding and moving the electrical contact 4 by hand. This may be especially advantageous for small electrical contacts 4 (such as those which are small in relation to a user's fingers) and/or wherein movement of the electrical contact 4 requires high precision, such as when there is a low tolerance between the outer diameter of the stranded wires 5 (which are to be inserted into the barrel 6 of the electrical contact) and the diameter of the opening to the interior volume 17 of barrel 6.

As will be understood, once the electrical contact 4 is secured within the tool 10 (i.e. secured relative to the funnel portion 15 as described above), a user of the wire insertion tool 10 will be able to insert conductive wires 5 of a cable 9 through the larger first aperture 18 of the funnel portion 15 such that the outermost conductive wires 5, which contact the truncated conical inner surface 31 of the funnel portion 15, are guided along the truncated conical inner surface 31 to the second smaller aperture 19 as the conductive wires 5 are inserted progressively further through the funnel portion 15. Thus, even if the conductive wires 5 of a cable 9 are inserted into funnel portion 15 at an angle to the longitudinal axis 21, the funnel portion ensures that all of the conductive wires 5 are inserted into the barrel 6 of the electrical contact 4, without any bending or splaying of the conductive wires 5, as shown in Figure 4B. Moreover, the second smaller aperture 19 at the end of the truncated conical inner surface 31 of the funnel portion 15 may be smaller than the opening to the interior volume 17 of barrel 6 defined by rim 22, such that substantially no conductive wires 5 are able to bend or splay as they are inserted into the barrel 6.

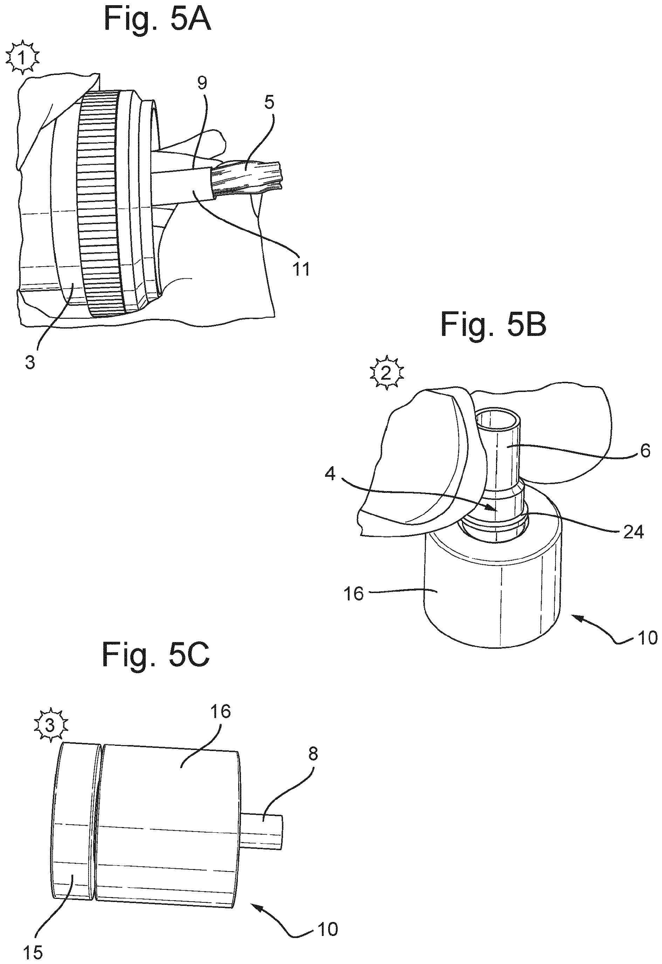

Figure 5A-5F shows images of the stages of a method of inserting conductive wires 5 of a cable 9 into an electrical contact 4 using a wire insertion tool 10 according to an embodiment of the present disclosure.

In Figure 5A, a cable 9 is provided with stranded conducting wires 5 ready to be inserted into the barrel 6 of an electrical contact 4, e.g. an electrical contact 4 has previously been cut off and a portion of the insulating sleeve 11 of cable 9 has been removed so as to reveal the conducting wires 5 which are to be inserted into a replacement electrical contact 4.

In Figure 5B, an electrical contact 4 is inserted through the first open end 24 of securing member 16, whilst the opening to barrel 6 of the electrical contact 4 is facing away from the securing member 16.

In Figure 5C, the electrical contact 4 has been fully inserted into the securing member 16 such that the pin 8 of the contact 4 projects through the second open end 30 of the securing member 16. The receiving portion 14 has subsequently been inserted into the securing member 16 so as to surround the barrel 6 and secure the electrical contact 4 relative to the funnel portion 15 in the manner shown in Figure 4A.

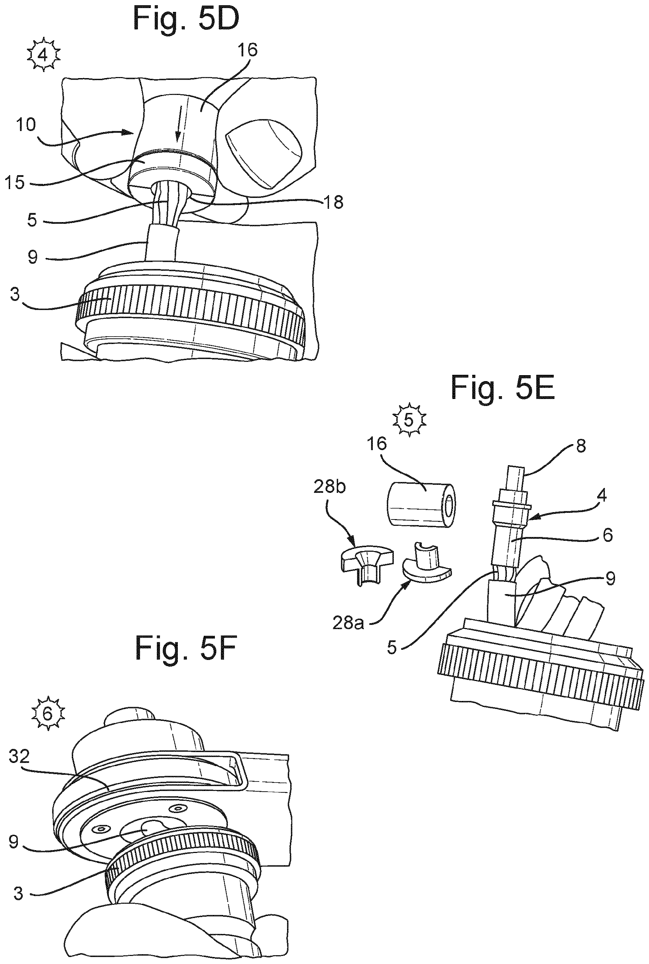

As shown in Figure 5D, the wire insertion tool 10 may then be held one-handed and maneuvered so as to insert the conductive wires 5 of cable 9 through the first aperture 18 of funnel portion 15, which enables all of the conductive wires 5 to be guided by the inner surface 31 of the funnel portion 15 into barrel 6 in the manner shown in Figure 4B. Accordingly, the user's other hand is free to hold and manipulate the cable 9 and/or the electrical connector assembly 3 during the insertion process.

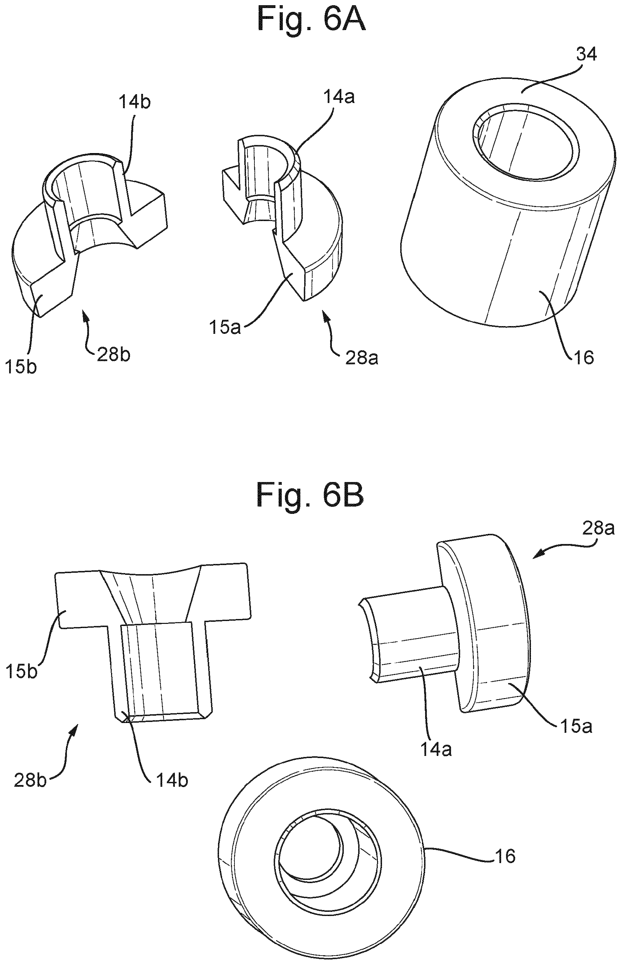

In Figure 5E, the securing member 16 and funnel 15 and receiving 14 portions have been removed from the electrical contact 4 so as to reveal all of the conductive wires 5 successfully inserted into the barrel 6 of the electrical contact 4. As shown in Figure 5E (and discussed in more detail in relation to Figures 6A-6B), the funnel portion 15 and receiving portion 14 may be formed from two discrete pieces 28a,28b. As will be understood, this enables the funnel 15 and receiving 14 portions to be easily taken off from the electrical contact 4 and cable 9 whilst the conductive wires 5 remain inserted into the barrel 6 of the electrical contact 4. That is, the securing member 16 may be slid off from the electrical contact 4 along the longitudinal direction 21 away from the funnel 15 and receiving 14 portions. This enables the funnel 15 and receiving 14 portions to be released from the electrical contact 4 and removed by separating the two pieces 28a,28b.

In Figure 5F, the operation may be completed by inserting the electrical contact 4 into a conventional crimping machine 32 so as to crimp the barrel 6 of the electrical contact 4 onto the conductive wires 5 inserted therein so as to form a crimped connection 13 (e.g., in a similar manner as shown in Figure 1B).

Figures 6A-6B show perspective images of the wire insertion tool 10 used in Figures 5A-5F. As discussed above, a first piece 28a provides a first part 14a of the receiving portion 14 and a first part 15a of the funnel portion 15, wherein the first parts 14a,15a of the receiving and funnel portions 14,15 maybe integral. A second piece 28b provides a first part 14b of the receiving portion 14 and a first part 15b of the funnel portion 15, wherein the first parts 14b, 15b of the receiving and funnel portions 14,15 may be integral. In use, e.g. as shown in Figures 5C-5D, the two pieces 28a,28b together provide the funnel portion 15 and receiving portion 14. The close tolerance fit, in use, between the securing member 16 and the first and second parts 14a, 14b of the receiving portion 14 ensures that the two pieces 28a,28b are held close enough together such that there is no gap between the two pieces 28a,28b large enough for a wire 5 to pass into. A user can then ensure that the two pieces 28a,28b are held together by inserting the receiving portion 14 parts 14a, 14b of the two pieces 28a,28b into the securing member 16 in the longitudinal direction 21, and ensuring that the two pieces 28a,28b are axially aligned by bringing the two pieces 28a,28b into contact with an electrical contact 4 within the securing member 16.

As will be appreciated, receiving portion 14, funnel portion 15 and securing member 16 of the tool 10 may together enable the tool 10, with the electrical contact received therein, to be manipulated in one hand of the user, such that the other hand of the user is free to manipulate the cable 9 so as to insert the conductive wires 5 thereof through the funnel portion 15 and into the cavity 17 of the electrical contact 4. As such, the tool 10 of the present disclosure may be convenient and ergonomical to use.

The present disclosure preferably relates to a handheld tool. However, it will be appreciated that the invention need not necessarily be a handheld tool. Accordingly, in some embodiments, there is provided a wire insertion tool for inserting conductive wires of a cable into an electrical contact, the tool comprising: a receiving portion configured to receive an electrical contact; a funnel portion configured to guide free ends of conductive wires of a cable into the electrical contact when the contact is located in the receiving portion; and a securing member configured to secure the funnel portion relative to the electrical contact when located in the receiving portion.

Although the present embodiments has been described with reference to preferred embodiments, it will be understood by those skilled in the art that various changes in form and detail may be made without departing from the scope of the embodiments as set forth in the accompanying claims.

## Claims

1. A handheld wire insertion tool for inserting conductive wires of a cable into an electrical contact, the tool comprising:
a receiving portion configured to receive an electrical contact;
a funnel portion configured to guide free ends of conductive wires of a cable into the electrical contact when the contact is located in the receiving portion; and
a securing member configured to secure the funnel portion relative to the electrical contact when located in the receiving portion.

2. The tool of claim 1, wherein the receiving portion and the securing member are configured to inter-engage so as to form a cavity therebetween for receiving the contact.

3. The tool of claim 2, wherein, when the receiving portion and the securing member are inter-engaged, the funnel portion is configured to be at a first end of cavity.

4. The tool of claim 3, wherein the securing member comprises a first opening and a second opening smaller than the first opening, and wherein, when the receiving portion and the securing member are inter-engaged, the second opening is at a second end of the cavity opposite to the first end of cavity.

5. The tool of claims 2 to 4, wherein the receiving portion is configured to be inserted inside the securing member.

6. The tool of claim 5, wherein the receiving portion is configured to have a radial interference fit with the securing member when inserted inside the securing member.

7. The tool of any preceding claim, wherein the funnel portion is located within a flange that extends radially outward from the receiving portion.

8. The tool of any preceding claim, wherein the funnel portion comprises an inner surface which tapers from a first aperture to a second aperture that is smaller than the first aperture, as a function of direction towards the receiving portion.

9. The tool of claim 8, wherein the inner surface linearly tapers from the first aperture to the second aperture.

10. The tool of claims 8 or 9, wherein receiving portion comprises a through-hole for receiving an electrical contact therein, wherein the diameter of the second aperture of the funnel portion is smaller than the diameter of the through-hole of the receiving member, for providing a shoulder to abut the electrical contact when received in the through-hole.

11. The tool of any preceding claim, wherein the tool is elongated and has a longitudinal axis, wherein the tool has a length of less than 10 cm along the longitudinal axis, and a radius of less than 10cm in a direction perpendicular to the longitudinal axis.

12. The tool of any preceding claim, wherein the funnel portion and the receiving portion are integrally connected.

13. The tool of any preceding claim, wherein the funnel portion and the receiving portion are formed from annular segments that are separable from each other so that the annular segments may be removed from surrounding a cable.

14. A kit comprising:
the tool of any preceding claim; and
said electrical contact.

15. A method of inserting conductive wires of a cable into an electrical contact, the method comprising:
providing the handheld wire insertion tool of any one of claims 1-13;
receiving an electrical contact within the receiving portion;
securing the funnel portion relative to the electrical contact by engaging the securing member with the receiving portion; and
inserting the free ends of conductive wires of a cable through the funnel portion and into the electrical contact.
